# EUROPEAN PATENT APPLICATION

(11) **EP 3 287 322 A1**
(43) Date of publication of application: **28.02.2018**
(21) Application number: 16782682.5
(22) Date of filing: 19.01.2016
(51) Int. Cl.: B60R 11/02, H04M 1/04

(54) **SUPPORT FOR HOLDING ELECTRONIC DEVICES IN VEHICLES**

(30) Priority: 21.04.2015 ES 201500293 U
(71) Applicant: Artefacto Perfecto, S.L., 08036 Barcelona (ES)
(72) Inventor: GUIRAO CARTAGENA, Fernando José, 08036 Barcelona (ES); ALGUACIL ALGARRADA, Mario, 08036 Barcelona (ES)
(74) Representative: Gallego Jiménez, José Fernando
(86) International application number: PCT/ES2016/070021
(87) International publication number: WO 2016/170203

(57) **Abstract**

he invention is based on a support for holding electronic devices in vehicles, consisting of a single part made of an elastic material (1) which is easily manually deformable such that it can be pressure-fitted between the windscreen (A) and the instrument panel (B). A cavity (2) is made in said support (1), the size of said cavity being slightly smaller than that of the electronic device (3) to be held, such that the device is held by pressure.

## Description

### TECHNICAL SECTOR

This invention falls within the scope of supports to hold portable electronic devices, such as mobile telephones, navigators, tablets, and similar devices, in vehicles.

### BACKGROUND OF THE INVENTION

A wide variety of supports for electronic devices in vehicles are known to exist. Some of these supports use magnets, other clips, etc. as the method for anchoring the device. Nevertheless, the most widespread support is made up of a suction cup, a flexible arm to orient the device, and a rigid piece, normally with adjustable width to adapt to different sized devices.

Experience with this type of support has shown us that they are not a totally effective solution; the movement of the vehicle, vibration, manipulation of the flexible arm, condensation or dirt on the windshield make that suction cups lose their anchoring capacity, so the functionality of these supports based on suction cups is severely compromised and they end up falling off during use.

Another aspect of suction-cup supports that could be improved is that the suction cup must be manipulated by the user to secure it to the windshield, with this zone, in many vehicles, too far out of the natural reach of the people, requiring effort and uncomfortable postures during the anchoring.

Also, in case of an accident, the existing supports available on the market become a hazard for the occupants of the vehicle.

The present invention aims to provide a definitive solution to the need to hold mobile devices in vehicles by means of a new type of support that can be installed simply and quickly and is fully functional in any circumstances.

As an important added value, the invention presented here will never pose a danger for anyone in the case of an accident.

### EXPLANATION OF THE INVENTION

Unlike existing holding devices, made up mainly of several pieces of rigid material, the described device is made up of only a single piece or block of elastic material that can easily be deformed manually.

This elastic block or piece will have a cylindrical or prism shape and will have a notch on one side with dimensions smaller than those of the object to be held.

The natural elastic of the construction material will allow the support to be effectively jammed between the dashboard and front windshield by pressing it in manually. The elastic characteristics of the material mean that it is extremely simple to install, orient, and remove the support.

The tendency of the elastic material of the support to recover its original shape generates a frictional force on the elements that are compressing it. This keeps the support fixed in the position in which it was installed.

The electronic device is held by the support, also by applying a slight manual pressure when inserting the device in question into the notch cut in the support for this purpose.

The width of this notch will be slightly less than that of the device to be supported, adapting to and holding it by the pressure generated by the deformation of the material out of which the support is constructed.

### BRIEF DESCRIPTION OF THE DRAWINGS

**Figure 1** shows a front view of the support for mobile devices in vehicles (1), which shows the notch to hold the mobile device under pressure (2).
**Figure 2** shows a side view of the support for mobile devices in vehicles (1), which shows the notch to hold the mobile device under pressure (2).
**Figure 3** shows a perspective view of the support for mobile devices in vehicles (1), which shows the notch to hold the mobile device under pressure (2).
**Figure 4** is a side view of the support (1) in its working position, secured under pressure between the front windshield (A) and the dashboard (B). Note the deformation of the upper and lower parts of the support (1) caused by the pressure exerted by the windshield (A) and the dashboard (B).
**Figure 5** shows the same elements as Figure 4, but adding the mobile device (3) held in the support (1) where it is secured by the pressure exerted by the notch on the sides of the device in question.
**Figure 6** is a perspective view of the support (1) in its working position, secured under pressure between the front windshield (A) and the dashboard (B).
   The deformation of the upper and lower parts of the support (1) caused by the pressure exerted by the windshield (A) and the dashboard (B) is also shown.
**Figure 7** shows the same elements as Figure 6, but including the mobile device (3) held in the support (1) where it is secured by the pressure exerted by the notch on the sides of the device in question.

### PREFERRED EMBODIMENT OF THE INVENTION

A preferred embodiment consists of a support made of a single solid cylindrical piece approximately 12 cm high by 7 cm along the base, made of a polyethylene plastic foam shaped by injection molding.
A rectangular notch will be cut in the central part of the surface of the cylinder, with the height slightly less than the width of the mobile telephone that will be secured and a depth slightly greater than the thickness of the mobile device.

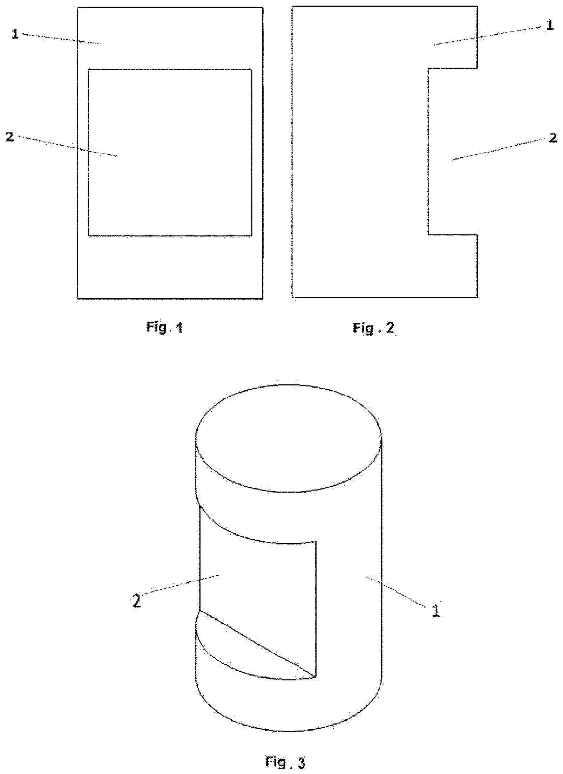

Figures 1 to 3 show the cylindrical elastic piece that makes up the support (1) with the rectangular hollow (2) for holding the electronic device.

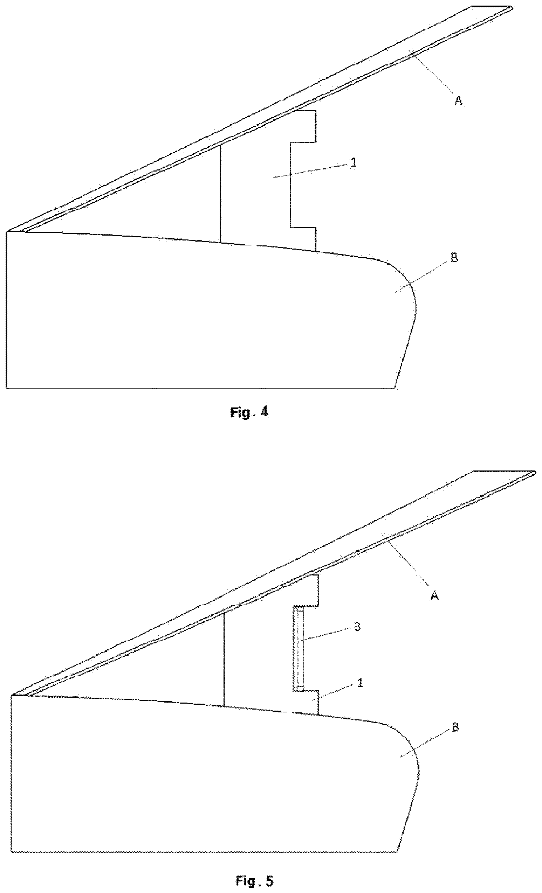

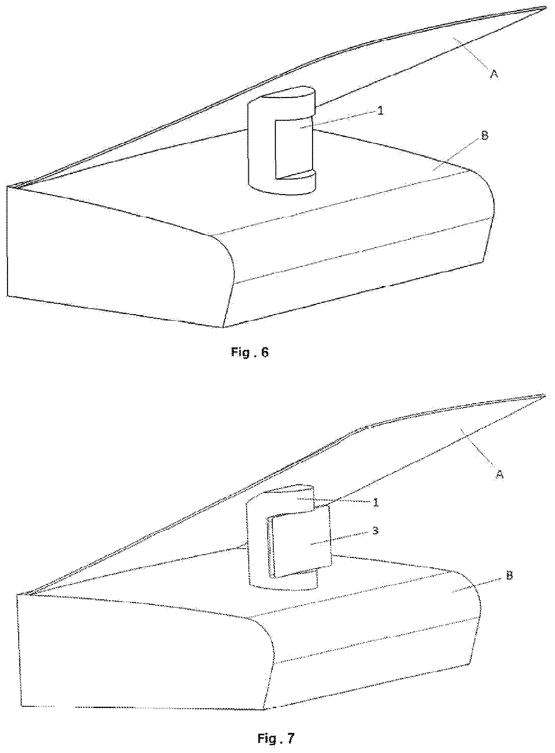

Figures 4 to 7 show the support (1) inserted under pressure between the front windshield (A) and the dashboard (B) and holding the electronic device (3) in figures 5 and 7.

## Claims

1. A support for securing electronic devices in vehicles, **characterized in that** it is made up of a single piece of elastic material (1) that can be deformed easily by hand, in order for it to fit under pressure inside the vehicle, and in which a notch (2) has been cut, with a size slightly smaller than that of the electronic device (3) to be held, so that it is secured by pressure.

2. A support according to claim 1, **characterized in that** it incorporates a piece in the top acting as a visor.

3. A support according to claims 1 and 2, **characterized in that** it comprises more than one notch to hold devices so that one device may support a wider variety of measurements of mobile devices.

4. A support according to claims 1, 2, and 3 **characterized in that** it is made up of two elastic pieces that hold the mobile devices by its ends.
